**Europäisches Patentamt**

**European Patent Office**

**Office européen des brevets**

(19)

(11) Veröffentlichungsnummer: **0 394 532**

**A1**

(12) # EUROPÄISCHE PATENTANMELDUNG

(21) Anmeldenummer: **89107669.7**

(22) Anmeldetag: **27.04.89**

(51) Int. Cl.5: **B01D 61/14, B01D 35/22**

(43) Veröffentlichungstag der Anmeldung:
**31.10.90 Patentblatt 90/44**

(84) Benannte Vertragsstaaten:
**AT CH FR GB IT LI NL SE**

(71) Anmelder: **MEMBRAFLOW GMBH & CO. KG**
**Filtersysteme**
**Gartenstrasse 133**
**D-7080 Aalen(DE)**

(72) Erfinder: **Bläse, Dieter**
**Wetzgarerstrasse 63**
**D-7085 Mutlangen(DE)**
Erfinder: **Feuerpeil, Hans-peter**
**Erfurterstrasse 6**
**D-7070 Schwäbisch Gmünd(DE)**

(74) Vertreter: **Lorenz, Werner, Dipl.-Ing.**
**Fasanenstrasse 7**
**D-7920 Heidenheim(DE)**

(54) **Verfahren und Vorrichtung zum Filtrieren von flüssigen Medien.**

(57) Bei einem Verfahren zum Filtrieren von flüssigen
Medien nach dem Tangentialflußsystem, wird die zu
filtrierende Flüssigkeit im Kreislauf durch mehrere
hintereinander angeordnete Filtermodule (8), in denen mehrere von dem zu filtrierenden Medium
durchströmten Filterelemente (3) angeordnet sind,
gepumpt. Der Druck bzw. die Überströmgeschwindigkeit des zu filtrierenden Mediums wird vor jedem
oder wenigstens vor nahezu jedem Filtermodul (8)
erhöht und zwar derart, daß wenigstens annähernd
der Druckverlust, der durch den Fließwiderstand in
den Filterkanälen (3) verursacht wird, kompensiert
wird. Zur Druckerhöhung können Pumpen (9) dienen, die vor jedem Filtermodul (8) angeordnet sind.

Fig.4

EP 0 394 532 A1

## Verfahren und Vorrichtung zum Filtrieren von flüssigen Medien

Die Erfindung betrifft ein Verfahren und eine Vorrichtung zum Filtrieren von flüssigen Medien nach dem Tangentialflußsystem, wobei die zu filtrierende Flüssigkeit im Kreislauf durch mehrere hintereinander angeordnete Filtermodule, in denen mehrere von dem zu filtrierenden Medium durchströmten Filterelemente angeordnet sind, gepumpt wird.

Die Tangentialflußfiltration, auch Cross-Flow- oder Querstromfiltration genannt, basiert auf zwei unterschiedlichen Volumenströmen. Das zu filtrierende Medium fließt parallel zur Oberfläche des Filtermediums (Membran), durch das das Filtrat hindurchtritt, womit die Geschwindigkeit des Filtrates senkrecht zur Membranoberfläche liegt.

Anwendungsmöglichkeiten für dieses Filtrationsprinzip sind z.B. die Molkereiindustrie, die Lebensmittel-/Getränkeindustrie für Filtration von Getränken, Herstellung von Fruchtsaftkonzentraten, Klärung von Glucose, Konzentrieren von Eiweiß und Bierrückgewinnung aus Hefe, die Pharmazeutische-und Chemische Industrie zum Reinigen, Konzentrieren oder Filtrieren von Bakterien, Hefen, Enzymen u.dgl., und Benzin-Wassertrennung oder Ölabtrennung, die Wasseraufbereitung und eine Rückgewinnung von Wertstoffen aus Abwasser oder der Verbesserung der Effektivität von Abwasseraufbereitungsanlagen.

Die Leistung und die Wirkungsweise der Filters hängen im wesentlichen von den günstigsten Verhältnissen der Tangentialflußgeschwindigkeit des zu filtrierenden Mediums, der senkrecht dazu verlaufenden Geschwindigkeit des Filtrates und des Transmembrandruckes ab. Mit Transmembrandruck wird die Druckdifferenz zwischen der Unfiltratseite, auch Retentatseite genannt, und der Filtratseite, auch Permeatseite genannt, bezeichnet.

Ist die Geschwindigkeit auf der Retentatseite zu gering, so besteht die Gefahr, daß es auf der Membranoberfläche zu Ab lagerungen von Stoffen kommt, worunter die Wirkungsweise leidet bzw. es zu einem Zusetzen des Filters und damit zu einem Ausfall des Elementes kommen kann. Wird der Transmembrandruck zu hoch gewählt, besteht ebenfalls die Gefahr einer Verblockung, durch die Ausbildung einer Deckschicht auf dem Membran.

Es ist nun bekannt aus Gründen der Wirtschaftlichkeit mehrere Filtermodule hintereinander anzuordnen. Die Umwälzung des im Kreislauf geführten Mediums erfolgt dabei durch eine Umwälzpumpe. Nachteilig dabei ist jedoch, daß aufgrund des in jedem Filtermodules auftretenden Fließwiderstandes in den hintereinander angeordneten Filtermodulen keine gleichen Verhältnisse bezüglich Strömungsgeschwindigkeit und insbesondere des Transmembrandruckes herrschen. Dies bedeutete in der Praxis, daß stets nur eine beschränkte Anzahl von Filtermodulen hintereinander angeordnet werden konnte, wobei jedesmal auch noch die Kompromiß bezüglich der Strömungsverhältnisse bzw. Transmembrandrücke geschlossen werden mußte. Die zuerst auf die Pumpe folgenden Filtermodule wurden mit einem zu hohen Transmembrandruck beaufschlagt und mit einer höheren Strömungsgeschwindigkeit durchfloßen, während die letzten Filtermodule einen zu geringen Transmembrandruck und eine zu geringe Überströmgeschwindigkeit besaßen. Dies bedeutete es konnten fast nirgends ideale Verhältnisse erreicht werden. Für die ersten Filtermodule mußte dabei häufig auch noch in der Filtratauslaßleitung eine gesondertes Regelventil zur Regelung bzw. Reduzierung des Transmembrandruckes eingesetzt werden, wobei die letzten Filtermodule durch eine Erhöhung des Systemdruckes über die Speisepumpe nur in die Nähe des idealen Transmembrandruckes gebracht werden konnten. Die Überströmgeschwindigkeit war nicht beeinflußbar, sondern resultierte aus der Permeatleistung der Filtermodule.

Aus diesem Grunde ist auch bereits vorgeschlagen worden, Filtermodule parallel zueinander anzuordnen bzw. eine Kombination zwischen hintereinander- und parallel nebeneinander angeordnete Filtermodule einzusetzen.

Nachteilig bei dieser Anordnung ist jedoch, daß hohe Umwälzmengen und daraus resultierende große Rohrleitungsdimensionen mit entsprechend hohen Fließwiderständen und einer dadurch entsprechend hohen Pumpenleistung notwendig sind. Damit eine gleiche Durchströmung der Filtermodule gewährleistet ist, müssen die parallel angeordneten Gruppen stets gleich sein, was bedeutete, daß nachträgliche Umbauten nicht mehr oder nur mit erheblichem Aufwand möglich sind. Trotzdem werden mit den Filtermodulen transmembrandruckabhängige unterschiedliche Leistungen erzielt. Außerdem müssen an mehreren Stellen Messungen des Fließwiderstandes bzw. der Überströmgeschwindigkeit vorgenommen werden, um die Pumpe entsprechend zur Leistungsanpassung regeln zu können.

Wenn bei der Filtration von bestimmten Produkten, z.B. von Bier, von einer Speisepumpe aus das zu filtrierende Medium unter höherem Druck in die Anlage eingefüllt werden mußte, erhöhten sich die Probleme durch den erforderlichen hohen Gesamtdruck in den hintereinander angeordneten Filtermodulen noch mehr.

Der vorliegenden Erfindung liegt daher die Aufgabe zugrunde ein Verfahren und eine Vorrichtung zum Filtrieren von flüssigen Medien der eingangs erwähnten Art zu schaffen, wobei weitgehend überall ein für das zu filtrierende Medium günstiger Transmembrandruck eingestellt werden kann, und bei Bedarf ggf. zusätzlich auch noch jeweils die günstigste Überströmgeschwindigkeit eingestellt werden kann.

Erfindungsgemäß wird diese Aufgabe dadurch gelöst, daß der Druck bzw. die Strömungsgeschwindigkeit des zu filtrierenden Mediums vor jedem oder wenigstens vor nahezu jedem Filtermodul erhöht wird und zwar derart, daß wenigstens annähernd der Druckverlust, der durch den Fließwiderstand in den Filterelementen verursacht wird, kompensiert wird.

Erfindungsgemäß wird nunmehr statt über eine zentrale Einrichtung, durch die das zu filtrierende Medium im Kreislauf umgewählzt wird, nunmehr dezentral der Druck bzw. die Über strömgeschwindigkeit für jedes Filtermodul in gewünschter Weise geregelt. Die benötigte Druckerhöhung, bedingt durch den Fließwiderstand im Filtermodul, läßt sich am einfachsten durch entsprechend dezentral angeordnete Pumpen erreichen, wobei möglichst jedem Filtermodul eine Pumpe zugeordnet wird. Die Pumpe kann dabei in Strömungsrichtung vor dem Filtermodul als Druckpumpe oder hinter dem Filtermodul als Saugpumpe betrieben werden.

Durch das erfindungsgemäße Verfahren und eine Vorrichtung zur Durchführung des Verfahrens hierfür kann für alle Filtermodule ein gleicher Transmembrandruck erzielt werden, der optimal in Abhängigkeit von dem Produkt und dessen Viskosität wählbar ist, damit eine optimale Filtrationswirkung erreicht wird, die damit auch für alle Filtermodule gleich ist.

Dies bedeutet, daß die Filterleistung deutlich besser gegenüber den bekannten Anlagen ist. Außerdem können damit beliebig viele Filtermodule hintereinander angeordnet werden, wobei im Bedarfsfalle auch nachträglich noch entsprechende kostengünstige Umbauten möglich sind.

Dadurch daß im Gegensatz zum Stand der Technik zur Erzielung einer bestimmten Filterleistung keine Filtermodule mehr parallel angeordnet werden müssen, können mehrere großdimensionierte Rohrleitungen eingespart werden. Außerdem ist der Platzverbrauch hierfür geringer. Da weiterhin auch keine so großen Mengen mehr umgewälzt werden müssen, kann auch die Stromaufnahme der Pumpen entsprechend reduziert werden.

Ein weiterer Vorteil der Erfindung besteht darin, daß unabhängig von der Größe der Filteranlage und der daraus resultierenden Anzahl von Pumpen und Filtermodulen sich ein System darstellt, das es erlaubt, standardisierte gleiche Bauteile in der Tangentialflußfilteranlage zu verwenden.

Ein weiterer Vorteil der Erfindung betseht darin, daß durch die stets gleichen Transmembrandrücke auch gleiche Bauteile verwendet werden können und Zusatzeinrichtungen zur Regulierung des Transmembrandruckes von einzelnen Fultermodulen entfallen können.

Eine weitere sehr vorteilhafte und nicht naheliegende Weiterbildung der Erfindung kann darin bestehen, daß die Zufuhr von neuem zu filterndem Medium zentral an einer Stelle oder dezentral zu jedem Filtermodul erfolgt.

Dadurch, daß nunmehr jedem Filtermodul ein druckerhöhendes Glied, wie z.B. eine Pumpe zugeordnet ist, kann in einfacher Weise auch eine dezentrale Zuführung von zu filtrierendem Medium erfolgen. Dies bedeutet, daß auch in allen hintereinander angeordneten Filtermedien überall die gleiche Strömungsmenge vorliegt. Hierzu ist es lediglich erforderlich, daß jeweils das über die Filtratauslaßleitungen entnommene Filtrat nachfolgend entsprechend neu zugeführt wird, womit auch jeweils eine sehr günstige Überströmgeschwindigkeit eingestellt werden kann, da die Reduzierung der Überströmgeschwindigkeit, die durch die Permeatabgabe hervorgerufen worden ist, kompensiert wird.

In einer anderen vorteilhaften Weiterbildung der Erfindung kann vorgesehen sein, daß Reinigungsflüssigkeit aus einer Rückspüleinrichtung dezentral jeweils einem Filtermodul zugeführt wird, und daß für die Filtermodule gemeinsam oder einzeln eine Rückspülung erfolgt.

Wenn es zu einem Verblocken eines oder mehrerer Filtermodule kommt, ist es lediglich erforderlich, daß man dezentral eine für alle Filtermodule je nach Produkt geltende Rückspülung (Druck, Rückspülmenge) vornimmt, wobei ggf. für die übrigen Filtermodule der Filtrationsprozeß nicht unterbrochen werden muß.

Zur Anpassung bzw. Einstellung des jeweils optimalsten Transmembrandruckes kann vorgesehen sein, daß die Filtratauslaßleitungen der Filtermodule in eine gemeinsame Sammelleitung münden, in der ein Regelventil zur Regelung des Transmembran druckes angeordnet ist. Dies gilt insbesondere für Flüssigkeiten und darin gelöste Gase.

Dadurch, daß durch die jeweiligen Druckerhöhungen in den Filtermodulen in diesen überall der gleiche Transmembrandruck herrscht, kann in einfacher Weise durch Anordnung des Regelventiles in der Sammelleitung eine für alle Filtermodule gleichwirkende Beeinflußung des Transmembrandruckes vorgenommen werden.

Nachfolgend ist anhand der Zeichnung ein erfindungsgemäßes Verfahren zusammen mit einem Ausführungsbeispiel näher beschrieben.

Es zeigt:

Fig. 1: als Filterelement ein Multikanalelement in perspektivischer Darstellung;

Fig. 2: eine Ausschnittsvergrößerung entsprechend "A" aus der Fig. 1;

Fig. 3: eine Stirnansicht eines Filtermodules mit mehreren nebeneinander angeordneten Multikanalelementen;

Fig. 4: eine schematische Darstellung der erfindungsge mäßen Vorrichtung mit mehreren hintereinander angeordneten Filtermodulen in geschlossener Bauweise;

Fig. 5: eine schematische Darstellung der erfindungsgemäßen Vorrichtung mit mehreren hintereinander angeordneten Filtermodulen in offener Bauweise.

Die nachfolgend beschriebenen Filtermodule mit ihren Multikanalelementen als Filterelemente sind selbstverständlich lediglich beispielsweise genannt. Im Bedarfsfalle können für den gleichen Zweck auch andere Ausbildungen, insbesondere von Multikanalelementen, verwendet werden. Statt Multikanalelementen können z.B. auch mehrere einzelne Filterrohre verwendet werden.

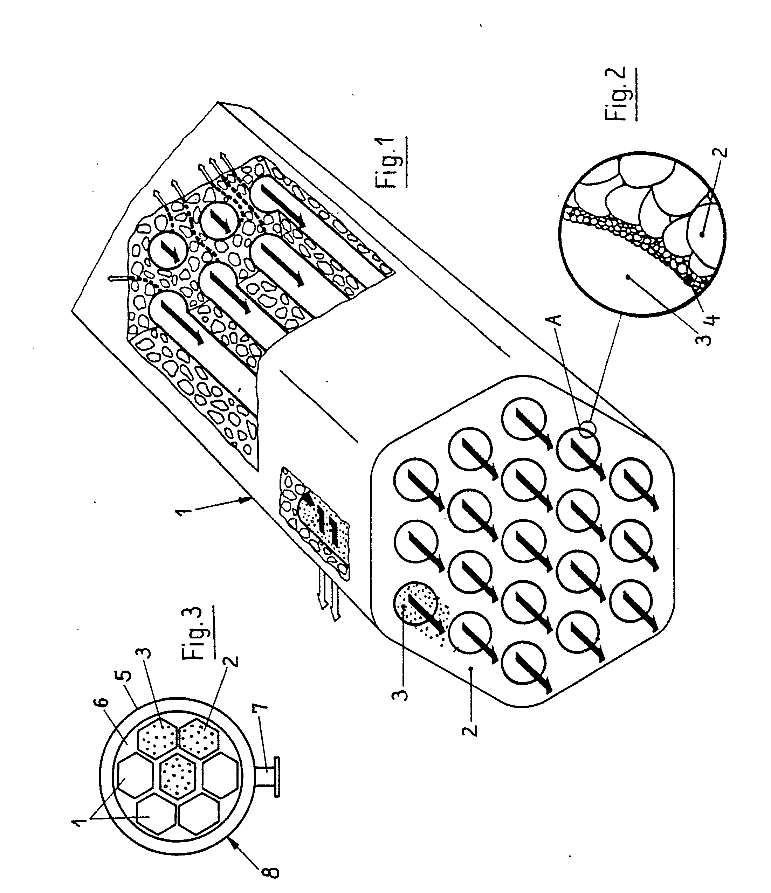

Das in der Fig. 1 dargestellt Multikanalelement 1 besteht aus einem Träger 2 aus keramischem Material, das einen derartigen porösen Aufbau besitzt, daß sich auf der Innenseite von einer Vielzahl von Filterkanälen 3, die in den Träger 2 eingebracht sind, ein Membran 4 bildet.

Die Filterkanäle 3 verlaufen parallel zu dem hexagonalen Träger 2 und das zu filtrierende Medium bzw. die Flüssigkeit fließt in jedem Filterkanal 3 tangential an dem Membran 4 vorbei, wobei das Filtrat (Permeat) die Membran 4 passiert und über den porösen Träger 2 nach außen abfließt. Da der Träger wesentlich poröser ist als die dünne Membran, kann der Druckverlust beim Durchtritt durch den Träger 2 im Vergleich zu dem Druckverlust durch die Membran 4 vernachläßigt werden.

Wie aus der Fig. 3 ersichtlich ist, sind mehrere Multikanalelemente entsprechend der Ausgestaltung nach der Fig. 1 parallel nebeneinander in einem Behälter 5 angeordnet.

Werden statt Multikanalelement 1 einzelne Filterrohre verwendet, so sind diese ebenfalls in einer entsprechenden Anzahl nebeneinander in dem Behälter 5 angeordnet.

Der Raum zwischen der Innenwand des Behälters 5 und den Multikanalelementen 1 dient als Permeatraum 6, von dem aus eine Filtratauslaßleitung 7 ausgeht. Ein derartiger Behälter wird als Filtermodul 8 bezeichnet. Die Anzahl der in einem Filtermodul 8 angeordneten Multikanalelementen 1 mit ihren Filterkanälen 3 ist beliebig und richtet sich nach dem Anwendungsfall, der Größe der Träger 2 und der Filterkanäle 3.

Die zu filtrierende Flüssigkeit strömt in ein Filtermodul 8 von einer Stirnseite aus in die Filterkanäle 3 ein und verläßt das Filtermodul 8 auf der gegenüberliegenden Stirnseite. Zur Abdichtung gegenüber dem Permeatraum 6 sind selbstverständlich Abdichtmittel zwischen den einzelnen Multikanal elementen und der Wand des Behälters 5 im Bereich der beiden Stirnseiten erforderlich (nicht dargestellt).

Um nun eine optimale Wirksamkeit zu gewährleisten, sollten nun die Geschwindigkeiten und der Transmembrandruck aufeinander abgestimmt sein.

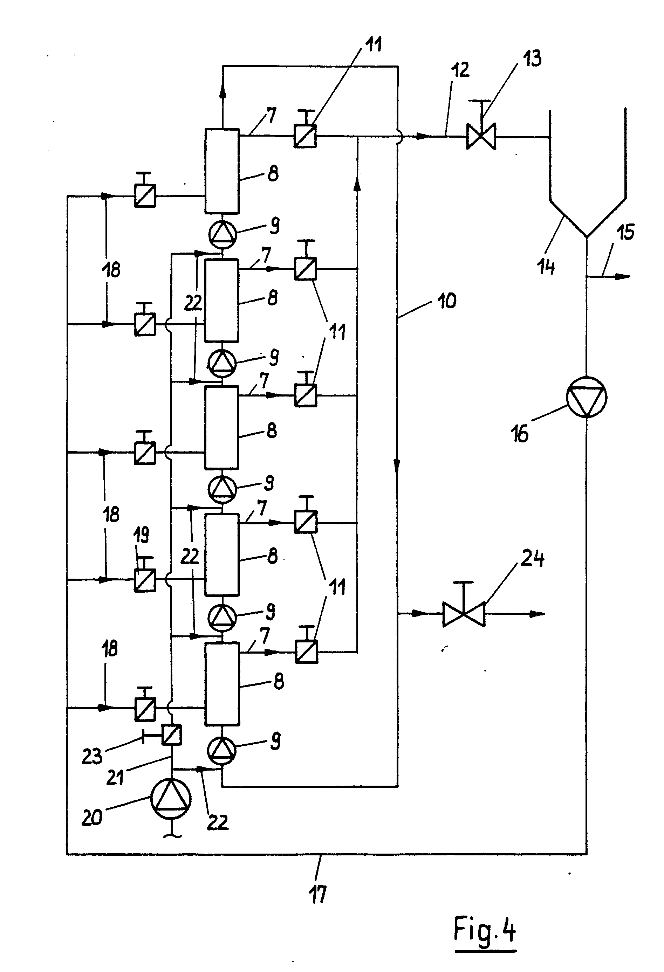

In der Fig. 4 ist das erfindungsgemäße Verfahren anhand einer Vorrichtung prinzipmäßig dargestellt. Wie ersichtlich sind fünf Filtermodule 8, deren Anzahl selbstverständlich jedoch beliebig ist, hintereinander angeordnet. Vor jedem Filtermodul 8 befindet sich eine Pumpe 9. Vom Auslaß des letzten Filtermodules 8 aus führt eine Rückleitung 10 zum Eingang der Pumpe 9 für das erste Filtermodul 8. Da die Pumpen 9 lediglich den Fließwiderstand in einem Filtermodul 8 überwinden bzw. kompensieren müssen, können sie entsprechend klein dimensioniert werden.

Die Filtratauslaßleitung 7 jedes Filtermodules 8 ist mit einem Absperrglied 11 versehen. Alle Filtratauslaßleitungen 7 münden in eine Sammelleitung 12. In der Sammelleitung 12 ist ein Regelventil 13 angeordnet. Durch das Regelventil 13 läßt sich der Transmembrandruck für alle Filtermodule 8 gemeinsam einstellen. Das Filtrat wird in einem Sammelbehälter 14 gesammelt und über eine Leitung 15 abgezogen.

Über eine Pumpe 16 als Rückspüleinrichtung kann über eine Rückspülleitung 17, von der aus Rückspülzweigleitungen 18 zu jedem Filtermodul 8 abzweigen, eine Rückspülung der Filteroberfläche erfolgen. Da in jeder Rückspülzweigleitung 18 ein Absperrglied 19 angeordnet ist, kann diese Rückspülung im Bedarfsfalle auch dezentral, d.h. für einzelne Filtermodule 8 erfolgen.

Über eine Speisepumpe 20 erfolgt über eine nachgeschaltete Zulaufleitung 21 eine Zufuhr von neuer zu filtrierender Flüssigkeit. Von der Zulaufleitung 21 aus zweigen jeweils Zuleitungen 22 zu jede Filtermodul 8 in den Bereich jeder Pumpe 9 ab.

Zwischen der ersten Zuleitung 22 zu dem ersten Filtermodul 8 und der zweiten Zuleitung 22 zu dem zweiten Filtermodul 8 befindet sich in der Zulaufleitung 21 ein Absperrglied 23. Je nach Stellung des Absperrgliedes 23 kann eine Zufuhr von Flüssigkeit auch ausschließlich zentral zu dem ersten Filtermodul 8 erfolgen. Selbstverständlich sind jedoch auch in der Zulaufleitung 21 noch weitere Absperrventile zwischen den nachgeschalteten Zuleitungen 22 möglich, so daß die verschiedensten Kombinationsmöglichkeiten bezüglich der Zuführung von zu filtrierender Flüssigkeit möglich sind.

In der Rückleitung 10 (Retentatkreislauf) ist ein Ausschleuß ventil 24 zum Ausschleußen von aufkonzentriertem Retentat oder Konzentrat angeordnet.

Durch ein Hinzufügen eines oder mehrerer Filtermodule 8 mit dazugehörigen Pumpen 9 an das letzte Filtermodul in der Reihe und eine entsprechende Verlängerung der Rohrleitungen kann die Anlage problemlos erweitert werden. Auf diese Weise kann die Anlage im Baukastenprinzip zusammengestellt werden.

Im allgemeinen wird man in der Praxis wesentlich mehr Filtermodule als die dargestellte Anzahl einsetzen. Aus Platzgründen kann dabei auch die Führung der hintereinander angeordneten Filtermodule 8 in Schlangenlinienform erfolgen. Grundsätzlich ist dabei jeder beliebige Verlauf möglich, was bedeutet, daß die erfindungsgemäße Vorrichtung problemlos an die vorhandenen Ortsverhältnisse sehr raumsparend angepaßt werden kann.

Der Systemdruck in der Vorrichtung kann in einfacher Weise durch den Druck der Speisepumpe 20 festgelegt werden.

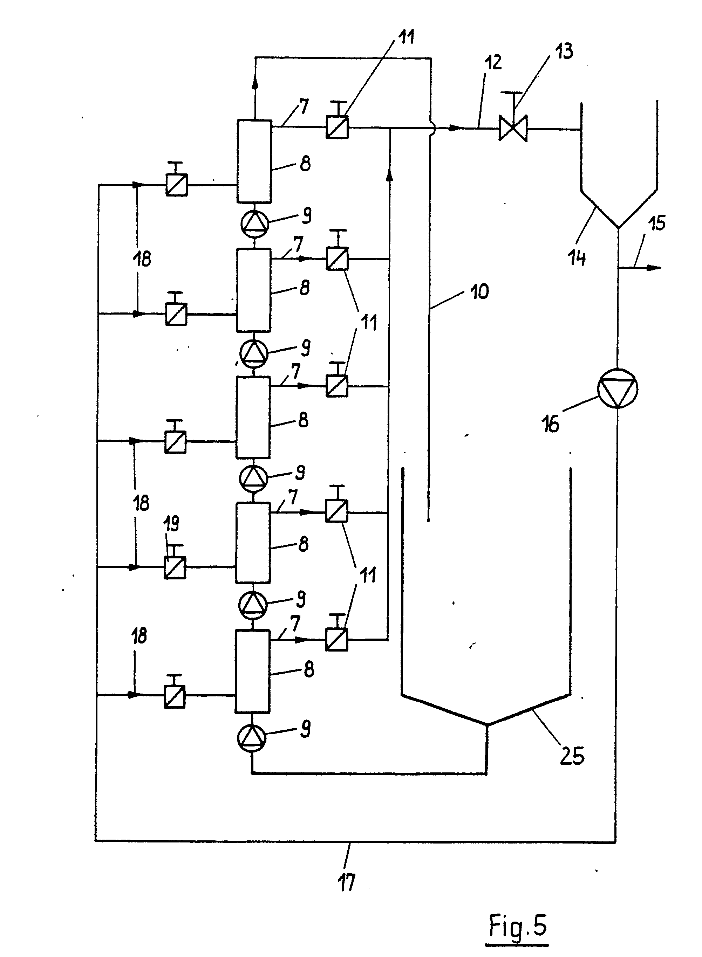

Die vorstehend beschriebene geschlossene Anlage kann im Rahmen der Erfindung auch als offene Anlage betrieben werden. Eine Ausführungsform hierfür ist in der Fig. 5 dargestellt. Statt von einem externen Tank wird die zu filtrierende Flüssigkeit dabei über einen offenen Umwälztank 25 umgewälzt.

In gleicher Weise sind selbstverständlich auch noch andere Betriebsarten möglich, wie z.B. ein halb offenes System für Chargenbetrieb, ein einstufiges, halb offenes System für kontinuierlichen Betrieb oder ein mehrstufiges, halb offenes System für kontinuierlichen Betrieb.

**Ansprüche**

1) Verfahren zum Filtrieren von flüssigen Medien nach dem Tangentialflußsystem, wobei die zu filtrierende Flüssigkeit im Kreislauf durch mehrere hintereinander angeordnete Filtermodule, in denen mehrere von dem zu filtrierenden Medium durchströmten Filterelemente angeordnet sind, gepumpt wird,
**dadurch gekennzeichnet,** daß der Druck bzw. die Überströmgeschwindigkeit des zu filtrierenden Mediums vor jedem oder wenigstens vor nahezu jedem Filtermodul (8) erhöht wird und zwar derart, daß wenigstens annähernd der Druckverlust, der durch den Fließwiderstand in den Filterkanälen (3) verursacht wird, kompensiert wird.

2) Verfahren nach Anspruch 1,
**dadurch gekennzeichnet,** daß die Zufuhr von neuem zu filterndem Medium zentral an einer Stelle oder dezentral zu jedem oder nahezu jedem Filtermodul (8) erfolgt.

3) Verfahren nach Anspruch 1 oder 2,
**dadurch gekennzeichnet,** daß Reinigungsflüssigkeit oder Perment aus einer Rückspüleinrichtung (16,17,18) dezentral jeweils einem Filtermodul (8) zugeführt wird, und daß für die Filtermodule (8) gemeinsam oder einzeln eine Rückspülung erfolgt.

4) Vorrichtung zur Durchführung des Verfahrens nach Anspruch 1,
wobei mehrere Filtermodule, in denen sich mehrere Multikanalelemente mit einer Vielzahl von den zu filtrierenden Medium durchströmten Filterkanälen befinden, hintereinander angeordnet sind,
**dadurch gekennzeichnet,** daß jedes oder nahezu jedes Filtermodul (8) mit einem Druckerhöhungsglied (9) versehen ist.

5) Vorrichtung nach Anspruch 4,
**dadurch gekennzeichnet,** daß das Druckerhöhungsglied eine Pumpe (9) ist.

6) Vorrichtung nach Anspruch 5,
**dadurch gekennzeichnet,** daß die Pumpe (9) vor jedem Filtermodul (8) angeordnet ist.

7) Vorrichtung nach einem der Ansprüche 4-6,
**dadurch gekennzeichnet,** daß die Anlage durch Hinzufügung von weiteren Filtermodulen (8) mit Pumpen (9) oder durch Wegnahme von Filtermodulen (8) mit Pumpen (9) veränderbar ist.

8) Vorrichtung nach einem der Ansprüche 4-7,
**dadurch gekennzeichnet,** daß für jedes oder wenigstens annähernd für jedes Filtermodul (8) eine Zuleitung (22) zur Zufuhr von neuem zu filterndem Medium vorgesehen ist, die mit der Speisepumpe (20) für die Anlage verbunden ist.

9) Vorrichtung nach Anspruch 8,
**dadurch gekennzeichnet,** daß nach der Speisepumpe (20) in der Zulaufleitung (21) wenigstens ein Umschaltventil (23) für eine zentrale oder dezentrale Zuführung von neuem zu filterndem Medium vorgesehen ist.

10) Vorrichtung nach einem der Ansprüche 4-9,
**dadurch gekennzeichnet,** daß jedes oder nahezu jedes Filtermodul (8) mit einer Rückspülzweigleitung (18) versehen ist, die jeweils einzeln oder gemeinsam mit anderen Rückspülzweigleitungen (18) mit einer Rückspüleinrichtung (16,17) verbindbar ist.

11) Vorrichtung nach einem der der Ansprüche 4-10,
**dadurch gekennzeichnet,** daß die Filtratauslaßleitungen (7) der Filtermodule (8) in eine gemeinsame Sammelleitung (12) münden, in denen ein Regelventil (13) zur Regelung des Transmembrandrukkes und der Permentmenge angeordnet ist.

Fig.3

Fig.1

Fig.2

EP 0 394 532 A1

Fig.4

EP 0 394 532 A1

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 418 010 (HEINRICH FRINGS GmbH) * Figur; Ansprüche 1,4,5; Seite 3, Zeilen 13-20; Seite 4, Zeilen 16-28; Seite 8, Zeilen 12-16; Seite 9, Zeile 28 - Seite 10, Zeile 2 * | 1,2,4 | B 01 D 61/14 B 01 D 35/22 |
| Y | | 3,10,11 | |
| X | EP-A-0 210 837 (RESEARCH AND DEVELOPMENT ASSOCIATION FOR MEMBRANE APPLICATIONS TO THE FOOD INDUSTRIES) * Zusammenfassung; Figuren 1,6,7; Spalte 1, Zeilen 29-39; Spalte 2, Zeile 32 - Spalte 3, Zeile 10; Spalte 9, Zeilen 33-48; Ansprüche 1-4 * | 1,2,4-7 | |
| Y | WO-A-8 804 141 (VALMONT S.A.) * Zusammenfassung; Figur 2; Ansprüche 1-3,8,10,11; Seite 3, Zeile 19 - Seite 4, Zeile 27; Seite 7, Zeile 7 - Seite 8, Zeile 23 * | 3,10,11 | |
| A | | 1,4-7 | RECHERCHIERTE SACHGEBIETE (Int. Cl.5) |
| X | PATENT ABSTRACTS OF JAPAN, Band 13, Nr. 15 (C-559)[3363], 13. Januar 1989; & JP-A-63 221 805 (SUMITOMO BAKELITE CO. LTD) 14-09-1988 * Zusammenfassung * | 1,2,4,8 | B 01 D |
| A | IDEM | 9 | |
| A | DE-A-3 533 306 (A. REITER) * Zusammenfassung; Figur 1; Ansprüche 1,2; Spalte 8, Zeilen 2-5 * -/- | 1,4-7 | |

Der vorliegende Recherchenbericht wurde für alle Patentansprüche erstellt

| Recherchenort | Abschlußdatum der Recherche | Prüfer |
|---|---|---|
| DEN HAAG | 09-01-1990 | HOORNAERT P.G.R.J. |

**Europäisches Patentamt**

# EUROPÄISCHER RECHERCHENBERICHT

Nummer der Anmeldung

EP 89 10 7669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 208 450 (APV INTERNATIONAL LTD) * Zusammenfassung; Figuren 1-4; Seite 6, Zeilen 7-29 * --- | 1,4-7 | |
| A | PATENT ABSTRACTS OF JAPAN, Band 3, Nr. 55 (C-45), 11. Mai 1979, Seite 132 C 45; & JP-A-54 31 088 (TORAY K.K.) 07-03-1979 * Zusammenfassung * ----- | 1,4-7 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 09-01-1990 | HOORNAERT P.G.R.J. |